(19) Europäisches Patentamt

European Patent Office

Office européen des brevets

(11) EP 1 732 245 A2

(12) **EUROPEAN PATENT APPLICATION**

(43) Date of publication:
13.12.2006 Bulletin 2006/50

(51) Int Cl.:
H04B 7/04 (2006.01)     H04B 7/08 (2006.01)
H04B 7/06 (2006.01)

(21) Application number: 06011863.5

(22) Date of filing: 08.06.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 08.06.2005 KR 20050048655

(71) Applicant: Samsung Electronics Co., Ltd.
Yeongtong-gu
Suwon-si, Gyeonggi-do (KR)

(72) Inventors:
• Yun, Sung-Ryul
Yeongtong-gu,
Suwon-si,
Gyeonggi-do (KR)

• Chae, Chan-Byoung
Jongro-ku,
Seoul (KR)
• Hong, Sung-Kwon
Gangbuk-ku,
Seoul (KR)
• Kim, Young-Kyun
Bundang-gu,
Sungnam-si,
Gyeonggi-do (KR)
• Park, Dong-Seek
Yongin-si,
Gyeonggi-do (KR)

(74) Representative: Grünecker, Kinkeldey,
Stockmair & Schwanhäusser
Anwaltssozietät
Maximilianstrasse 58
80538 München (DE)

(54) **Transmitting and receiving apparatus and method in closed-loop mimo antenna system using codebook**

(57)     A receiver and transmitter of a closed-loop MIMO antenna system using a codebook and a receiving and transmitting method thereof are provided. The receiver of the MIMO antenna system includes a window size decider and a beamforming weight selector. The window size decider stores a codebook with beamforming weights and selects the beamforming weights corresponding to a window size from the codebook, and the beamforming weight selector selects an optimal beamforming weight based on a current channel state among the beamforming weights outputted from the window size decider, and feeds back the selected optimal beamforming weight to a transmitter.

FIG.2

**Description**

**CROSS-REFERENCE TO RELATED APPLICATIONS**

This application claims the benefit of priority under 35 U.S.C. § 119 to application Serial No. 10-2005-48655 filed in the Korean Intellectual Property Office on June 8, 2005, the entire disclosure of which is hereby incorporated by reference.

**BACKGROUND OF THE INVENTION**

1. Field of the Invention

The present invention relates generally to a closed-loop Multiple Input Multiple Output (MIMO) system acquiring performance gain by using channel information. In particular, the present invention relates to an apparatus and method for searching a codebook in a closed-loop MIMO communication system using a codebook.

2. Description of the Related Art

In MIMO communication systems, although receivers know channel information, transmitters do not know the channel information. To improve the performance of the system, the transmitters need to know the channel information. On the assumption that an uplink channel is identical to a downlink channel, Time Division Duplex (TDD) systems can estimate the downlink channel at the transmitters. Thus, the use of beamforming is possible in both an uplink mode and a downlink mode.

An MIMO system with a transmitter performing pre-coding using channel information will be described below. Pre-coding means a beamforming method of multiplying a transmission (TX) signal by a weighting factor.

The transmitter multiplies an encoded signal (x) by a weight (w) for beamforming and transmits it to a channel. Assuming that the encoded signal (x) is a single stream, the weight (w) for the beamforming consists of beamforming vectors. A signal received by the beamforming is expressed as Eq. (1) below.

$$y = \sqrt{\frac{E_s}{N_r}} Hwx + n$$

$$\dots \dots (1)$$

where $E_s$, $N_r$, H, and n represent symbol energy, the number of RX antennas, channel, and zero mean Gaussian noise, respectively.

The transmitter/receiver finds an optimal beamforming vector (w) prior to the transmission/reception, and then performs the transmission/reception using the optimal beamforming vector (w). A beamformer (or codebook) (W) is determined by the number (Nt) of TX antennas, the number (m) of streams, and the number (N) of beamforming vectors. The beamformer (W) can be designed using "Grassmannian Line Packing". The beamformer (W) is expressed as Eq. (2) below.

$$W = [w_1 w_2 ... w_N], \, w_i : i = 1, ..., N$$

$$\dots \dots (2)$$

where $w_i$ represents an $i^{th}$ beamforming factor ($Nt \times 1$).

The beamformer W is designed using N number of beamforming vectors. Generally, the beamformer (or codebook) generates beamforming vectors randomly and calculates a minimum distance between the vectors. Then, the beamformer W is designed using N number of vectors, which make the minimum distance have a maximum value. Table 1 below shows a codebook having four TX antennas, a single stream, and eight beamforming vectors in an IEEE802.16e system. An antenna beam is formed using the predefined beamforming vectors.

[Table 1]

| Vector Index | 1 | 2 | 3 | 4 | 5 | 6 | 7 | 8 |
|---|---|---|---|---|---|---|---|---|
| Antenna 1 | 1 | 0.3780 | 0.3780 | 0.3780 | 0.3780 | 0.3780 | 0.3780 | 0.3780 |
| Antenna 2 | 0 | -0.2698 -j0.5668 | -0.7103 +j0.1326 | 0.2830 -j0.0940 | -0.0841 +j0.6478 | 0.5247 +j0.3532 | 0.2058 -j0.1369 | 0.0618 -j0.3332 |
| Antenna 3 | 0 | 0.5957 +j0.1578 | -0.2350 -j0.1467 | 0.0702 -j0.8261 | 0.0184 +j0.0490 | 0.4115 +j0.1825 | -0.5211 j0.0833 | -0.3456 +j0.5029 |
| Antenna 4 | 0 | 0.1587 -j0.2411 | 0.1371 +j0.4893 | -0.2801 +j0.0491 | -0.3272 -j0.5662 | 0.2639 +j0.4299 | 0.6136 -j0.3755 | -0.5704 +j0.2113 |

To find the optimal beamforming vector, the receiver (or terminal) has to carry out an operation of Eq. (3) below.

$$\arg\min_{\text{xbit}} \frac{E_s}{N_0} \text{tr}\left\{ \left( I_{N_t} + \frac{E_s}{N_r N_0} w_1^H H^H H w_1 \right)^{-1} \right\}$$

$$\ldots\ldots (3)$$

where $w_1$ is a beamforming vector selected from the previously known codebook, and I, $N_t$, $N_r$, H, $E_s$, and No represent an identity matrix, the number of TX antennas, the number of RX antennas, a channel between the TX antenna and the RX antenna, a signal, and a noise, respectively.

The receiver transmits the beamforming vector ($w_1$) selected through the operation of Eq. (3) to the transmitter over a feedback channel.

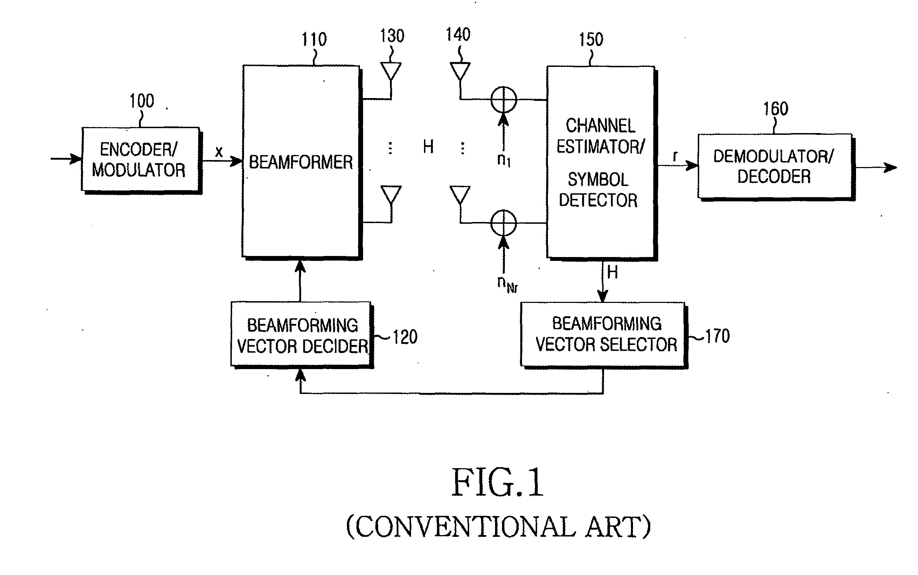

FIG. 1 is a block diagram of a conventional closed-loop MIMO system using a codebook.

Referring to FIG. 1, the transmitter includes an encoder/modulator 100, a beamformer 110, a beamforming vector decider 120, and a plurality of TX antennas 130. The receiver includes a plurality of RX antennas 140, a channel estimator/symbol detector 150, a demodulator/decoder 160, and a beamforming vector selector 170.

In the transmitter, the encoder/modulator 100 encodes an outgoing data in a given coding scheme and generates complex symbols by modulating the encoded data in a given modulation scheme. The beamforming vector decider 120 generates a beamforming vector based on an index fed back from the receiver. The beamforming vector decider 120 can generate the beamforming vector corresponding to the index because it has codebook information in a memory. The beamformer 110 multiplies the complex symbols by the beamforming vector and transmits the resulting signal through the antennas 130.

In the receiver, the channel estimator/symbol detector 150 receives signals through the RX antennas 140. At this point, the signals contain noise components $n_1$ and $n_{Nr}$. The channel estimator/symbol detector 150 calculates a channel coefficient matrix through the channel estimation, and detects RX symbols using the RX vector and the channel coefficient matrix. The demodulator/decoder 160 demodulates and decodes the RX symbols from the channel estimator/ symbol detector 150 into original information data.

The beamforming vector selector 170 selects an optimal beamforming vector using the channel coefficient matrix. The codebook information is stored in the memory. Using the beamforming vector and the channel coefficient matrix read from the memory, the beamforming vector selector 170 performs the operation of Eq. (3) to select the optimal beamforming vector. Also, the beamforming vector selector 170 feeds back the index of the selected beamforming vector to the transmitter over the feedback channel. Because the transmitter also has the codebook information, only the index of the beamforming vector is fed back. That is, size of the feedback information can be reduced because only the index of the beamforming vector is transmitted. As an example, when the codebook is designed using eight beamforming vectors, the index can be expressed in 3 bits.

The IEEE802.16e system decides the beamforming vector using 3-bit, 6-bit quantized feedback information. That is, the codebook can be designed using eight or sixty-four beamforming vectors according to the feedback information. In the case where the codebook is designed using sixty-four beamforming vectors, the receiver selects a beamforming vector satisfying Eq. (3) among the sixty-four beamforming vectors, and feeds back the selected beamforming vector to the transmitter. At this point, the searching operation (or calculating operation) of Eq. (3) has to be carried out as many times as the number of beamforming vectors. Therefore, the codebook-based system has a problem in that an amount of calculation increases as the number of the beamforming vectors increases.

Accordingly, there is a need for an improved apparatus and method for transmitting and receiving in a closed-loop MIMO system using a codebook.

## SUMMARY OF THE INVENTION

Exemplary embodiments of the present invention address at least the above problems and/or disadvantages and provide at least the advantages below. Accordingly, an object of the present invention is to provide an apparatus and method that can reduce an amount of calculation for a codebook searching in a closed-loop MIMO communication system.

Another exemplary object of the present invention is to provide an apparatus and method that can reduce the amount of time necessary for codebook searching in a closed-loop MIMO communication system.

A further exemplary object of the present invention is to provide an apparatus and method that can reduce the complexity due to codebook searching by aligning beamforming vectors of a codebook according to beam patterns in a closed-loop MIMO communication system.

A further exemplary object of the present invention is to provide an apparatus and method that can reduce the complexity due to codebook searching by adjusting the number of beamforming vectors to be searched according to channel environment in a closed-loop MIMO communication system.

According to one aspect of the present invention, a receiver of a MIMO antenna system comprises a window size decider for storing a codebook with beamforming weights, and selecting the beamforming weights corresponding to a window size from the codebook, and a beamforming weight selector for selecting an optimal beamforming weight based on a current channel state among the beamforming weights output from the window size decider, and feeding back the selected optimal beamforming weight to a transmitter.

According to another exemplary aspect of the present invention, a transmitter of a MIMO antenna system comprises a beamforming weight decider for storing a codebook with beamforming weights aligned according to beam directions, and generating a beamforming weight according to a codebook index fed back from a receiver, and a beamformer for forming a beam by multiplying to-be-transmitted symbols by the beamforming weight output from the beamforming weight decider.

According to further aspect of the present invention, a receiving method of a MIMO antenna system having a codebook with beamforming weights comprises selecting beamforming weights corresponding to a window size from the codebook, selecting an optimal beamforming weight based on a current channel state among the selected beamforming weights, and feeding back the selected optimal beamforming weight to a transmitter.

According to a further exemplary aspect of the preset invention, a receiving method of a MIMO antenna system having a codebook with beamforming weights comprises aligning the codebook according to beam directions, selecting beamforming weights corresponding to a window size from the aligned codebook, and selecting an optimal beamforming weight based on a current channel state among the selected beamforming weights and feeding back the selected optimal beamforming weight to a transmitter.

According to a further exemplary aspect of the present invention, a transmitting method of a MIMO antenna system comprises storing a codebook with beamforming weights aligned according to beam directions, and generating a beamforming weight according to a codebook index fed back from a receiver, and multiplying to-be-transmitted symbols by the beamforming weight and transmitting the resulting signals through a plurality of TX antennas.

## BRIEF DESCRIPTION OF THE DRAWINGS

The above and other objects, features and advantages of certain exemplary embodiments of the invention will become more apparent from the following detailed description when taken in conjunction with the accompanying drawings in which:

FIG 1 is a block diagram of a conventional closed-loop MIMO system using a codebook;
FIG. 2 is a block diagram of a closed-loop MIMO communication system according to an exemplary embodiment of the present invention;
FIG. 3 is a flowchart illustrating a codebook searching process of a receiver according to an exemplary embodiment of the present invention; and
FIG. 4 is a diagram illustrating an example of the codebook searching according to an exemplary embodiment of the present invention.
Throughout the drawings, the same drawing reference numerals will be understood to refer to the same elements, features and structures.

**DETAILED DESCRIPTION OF EXEMPLARY EMBODIMENTS**

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The following is an exemplary description of a closed-loop MIMO communication system using a codebook, which can reduce the complexity of codebook searching. The codebook may be designed using beamforming matrixes or beamforming vectors according to the number of transport streams. Hereinafter, the codebook designed using the beamforming vectors will be taken as an example.

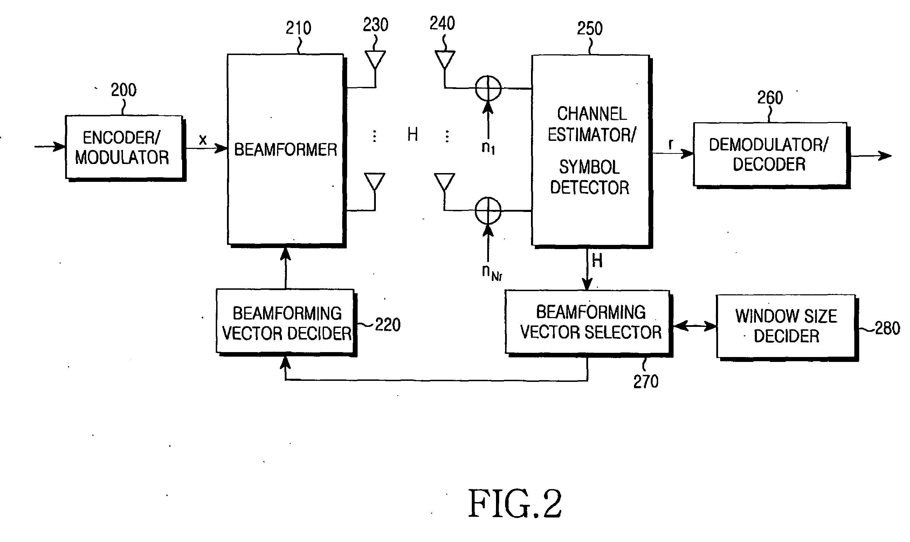

FIG. 2 is a block diagram of a closed-loop MIMO communication system according to an exemplary embodiment of the present invention.

Referring to FIG. 2, a transmitter includes an encoder/modulator 200, a beamfonner 210, a beamforming vector decider 220, and a plurality of TX antennas 230. A receiver includes a plurality of RX antennas 240, a channel estimator/ symbol detector 250, a demodulator/decoder 260, a beamforming vector selector 270, and a window size decider 280.

In the transmitter, the encoder/modulator 200 encodes an outgoing data in a given coding scheme and generates complex symbols by modulating the encoded data in a given modulation scheme. Examples of the coding scheme include a convolution code, a turbo code, a convolution turbo code, a Low Density Parity Check (LDPC) code and the like. Examples of the modulation scheme include a Binary Phase Shift Keying (BPSK) mapping 1 bit (s=1) to a single signal point (complex signal), a Quadrature Phase Shift Keying (QPSK) mapping 2 bits (s=2) to a single complex signal, a 8-ary Quadrature Amplitude Modulation (8QAM) mapping 3 bits (s=3) to a single complex signal, a 16QAM mapping 4 bits (s=4) to a single complex signal, a 64QAM mapping 6 bits (s=6) to a single complex signal and the like.

The beamforming vector decider 220 stores a codebook in which beamforming vectors are aligned according to beam directions, and generates a beamforming vector corresponding to an index fed back from the receiver. The beamformer 210 multiplies the complex symbols from the encoder/modulator 200 by the beamforming vector from the beamforming vector decider 220, and transmits the resulting signal through the TX antennas 230.

In the receiver, the channel estimator/symbol detector 250 receives signals through the RX antennas 240. At this point, the signals contain noise components $n_1$ and $n_{Nr}$. The channel estimator/symbol detector 250 calculates a channel coefficient matrix through the channel estimation, and detects RX symbols using the RX vector and the channel coefficient matrix. Examples of the RX symbol detecting algorithm include a Zero-Forcing (ZF) algorithm, a Minimum-Mean-Square Error (MMSE) algorithm and the like. The demodulator/decoder 260 demodulates and decodes the RX symbols from the channel estimator/symbol detector 250 into original information data.

The window size decider 280 stores a codebook in which beamforming vectors are aligned according to beam directions. The window size decider 280 decides a searching window size according to channel change. Also, the window size decider 280 selects beamforming vectors corresponding to the window size, based on the beamforming vector with respect to a previous RX signal, and provides the selected beamforming vectors to the beamforming vector selector 270. The searching window size is set to be large when the channel change is great and it is set to be small when the channel change is small. The channel change can be predicted using a RX signal to noise ratio (SNR) or a moving speed of the terminal. For example, when the change of the RX SNR is great or the moving speed of the terminal is high, it can be determined that the channel change is great. In other words, the searching window size (or the number of beamforming vectors to be searched) may vary with the channel change, or may be fixed to a value (for example, 1/4 or 1/2 of a total size of the codebook). When the searching window size is varied, its update period may have a predefined value or may be changed according to channel environment.

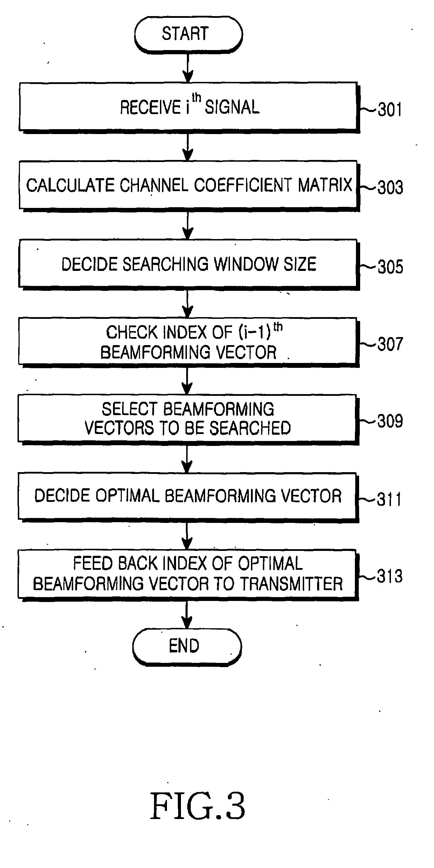

The beamforming vector selector 270 selects an optimal beamforming vector by performing the operation of Eq. (3) using the beamforming vectors selected by the window size decider 280 and the channel coefficient matrix (H) generated by the channel estimator/symbol detector 250. Then, the beamforming vector selector 270 feeds back the index of the selected beamforming vector to the transmitter. One of various algorithms for selecting the beamforming vector is illustrated in FIG. 3. Other algorithms may also be used to select the optimal beamforming vector.

As described above, the codebook searching apparatus according to an exemplary embodiment of the present invention includes the window size decider 280 and the beamforming vector selector 270. Because an existing codebook (a codebook having random characteristic) is designed by generating beamforming vectors randomly using "Grassmannian Line Packing", the beamforming vectors are not aligned according to beam patterns. However, according to an exemplary embodiment of the present invention, the beams of the beamforming vectors are drawn using a steering vector, and the codebook is designed by deciding the order (or index) of the beamforming vectors at an angle of 0-180°.

That is, exemplary embodiments of the present invention use the codebook in which the beamforming vectors are aligned according to the beam directions. If the codebook is aligned, there is a great possibility that adjacent beamforming vectors will be used in an environment where the channel change is small. Because there is a great possibility that the vectors adjacent with respect to the beamforming vector of the previous RX signal will be selected as the beamforming vectors of the next RX signal, it is possible to appropriately select the number of the beamforming vectors to be searched with respect to the beamforming vector of the previous RX signal (or the window size). Instead of finding the optimal beamforming vector through searching of all beamforming vectors, an exemplary embodiment of the present invention can find the optimal beamforming vector by searching only a part of the beamforming vectors.

FIG 3 is a flowchart illustrating a codebook searching process of the receiver according to an exemplary embodiment of the present invention.

Referring to FIG 3, in steps 301 and 303, when an $i^{th}$ RX signal is received, the receiver calculates a channel coefficient matrix by performing a channel estimation using the RX signal or pilot signal. For example, when beamforming vector searching is performed at a frame period, the $i^{th}$ RX signal becomes an $i^{th}$ frame signal. In step 305, the receiver decides the searching window size (the number of beamforming vectors to be searched) according to the channel change. The searching window size is set to be large when the channel change is great and it is set to be small when the channel change is small.

In step 307, the receiver checks the index of the beamforming vector with respect to a previous RX signal, that is, an $(i-1)^{th}$ RX signal. In step 309, the receiver accesses the codebook and selects the beamforming vectors corresponding to the window size, based on the $(i-1)^{th}$ beamforming vector.

In step 311, the receiver decides an optimal beamforming vector by performing the operation of Eq. (3) using the selected beamforming vectors and the channel coefficient matrix. In step 313, the receiver feeds back the index of the decided optimal beamforming vector to the transmitter.

If a first RX signal is received in step 301, there is no information on the previous beamforming vector. Therefore, the optimal beamforming vector is decided by performing the operation of Eq. (3) with respect to all beamforming vectors. Then, the searching operation is performed with respect to next RX signals while selecting the beamforming vectors corresponding to the window size based on the beamforming vector of the previous RX signal. For example, after a window size is defined based on the beamforming vector of the previous RX signal, the searching operation is performed while selecting beamforming vectors within the window.

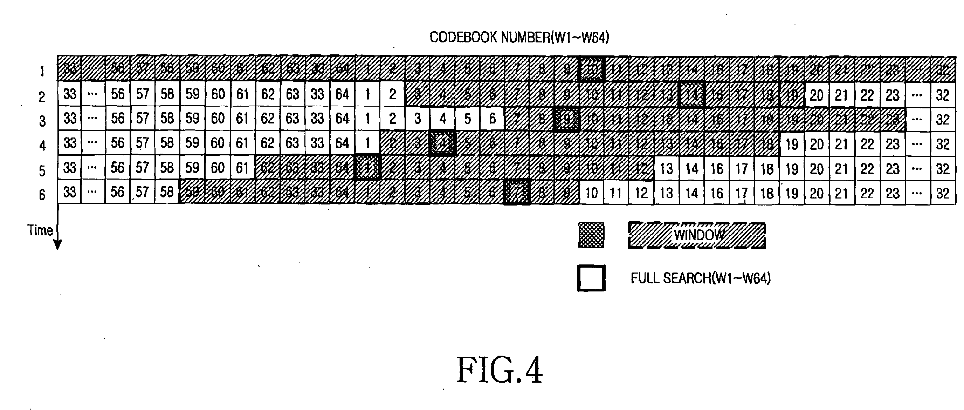

FIG. 4 is a diagram illustrating an example of codebook searching and its results according to an exemplary embodiment of the present invention. Specifically, FIG. 4 shows that the window searching of the exemplary embodiment of the present invention and the conventional codebook searching achieve similar performance.

The codebook of FIG. 4 shows a case where the number of TX antennas are four, the number of transport streams is one, and the index of the beamforming vector is expressed in 6 bits. Specifically, the codebook (4,1,6) adopted in IEEE 802.16e is realigned according to the beam directions.

In an exemplary embodiment, if the searching window size is 1/4 of all beamforming vectors, the searching window size (the number of the beamforming vectors to be searched) is 16. As described above, the optimal beamforming vector is decided by searching all the beamforming vectors at a first RX signal time (t=1). Next (t>1), only sixteen beamforming vectors adjacent to the optimal beamforming vector are searched. As illustrated in FIG 4, it can be seen that for RX signal times t=2 through 6, the optimal beamforming vector (□) calculated with respect to all the beamforming vectors (vectors 1-64) is identical to the optimal beamforming vector (⊠) calculated with respect to the beamforming vectors selected within the window (for example, at RX signal time t=2, vectors 3 through 19). Therefore, because the number of the beamforming vectors to be searched is reduced by 1/4, the complexity of the receiver can be reduced by 1/4.

As described above, in the closed-loop MIMO system using the codebook, the complexity due to the codebook searching can be improved. By aligning the randomly designed codebook according to the beam patterns, searching of the codebook selected within the window can achieve performance similar to searching of the entire codebook. Also, because the number of the beamforming vectors to be searched decreases, the complexity of the receiver can be remarkably reduced.

While the invention has been shown and described with reference to certain exemplary embodiments thereof, it will be understood by those skilled in the art that various changes in form and details may be made therein without departing from the spirit and scope of the invention as defined by the appended claims and the full scope of equivalents thereof.

**Claims**

1.   A receiver in a wireless communication system comprising:

a window size decider for storing a codebook comprising beamforming weights, and selecting, from the codebook, at least one of the beamforming weights corresponding to a window size; and
a beamforming weight selector for selecting an optimal beamforming weight based on a current channel state from among the at least one of the beamforming weights from the window size decider, and conveying the selected optimal beamforming weight to a transmitter.

2. The receiver of claim 1, wherein the beamforming weights of the codebook are aligned according to beam directions.

3. The receiver of claim 1, wherein the window size decider selects the at least one beamforming weights corresponding to a window size based on a previously selected beamforming vector.

4. The receiver of claim 1, wherein the window size is changed according to channel environment.

5. The receiver of claim 4, wherein an update period of the window size is changed according to the channel environment.

6. The receiver of claim 1, wherein the window size comprises a fixed value.

7. The receiver of claim 1, wherein the codebook comprises a design using Grassmannian Line Packing aligned according to beam directions.

8. The receiver of claim 1, wherein the beamforming weight selector conveys a codebook index of the selected beamforming weight to the transmitter.

9. The receiver of claim 1, further comprising a channel estimator for estimating a channel by using signals that are received through at least one RX antenna, and providing a channel coefficient matrix to the beamforming weight selector.

10. A transmitter in a wireless communication system comprising:

a beamforming weight decider for storing a codebook comprising beamforming weights aligned according to beam directions, and generating a beamforming weight according to a codebook index conveyed from a receiver; and
a beamformer for forming a beam by multiplying to-be-transmitted symbols by the beamforming weight from the beamforming weight decider.

11. The transmitter of claim 10, wherein the codebook comprises a design using Grassmannian Line Packing aligned according to beam directions.

12. A receiving method in a wireless communication system having a codebook with beamforming weights, the method comprising:

selecting at least one beamforming weight corresponding to a window size from a codebook; and
selecting an optimal beamforming weight based on a current channel state from among the at least one selected beamforming weight, and conveying the selected optimal beamforming weight to a transmitter.

13. The receiving method of claim 12, wherein the beamforming weights of the codebook are aligned according to beam directions.

14. The receiving method of claim 12, wherein the selecting of the at least one beamforming weight comprises:

checking a previously selected beamforming vector; and
selecting the at least one beamforming weight corresponding to the window size based on the previously selected beamforming vector.

15. The receiving method of claim 12, further comprising changing the window size according to a channel environment.

16. The receiving method of claim 12, further comprising changing a period of the window size according to a channel environment.

17. The receiving method of claim 12, wherein the window size comprises a fixed value.

**18.** The receiving method of claim 12, wherein the codebook comprises a design using Grassmannian Line Packing aligned according to beam directions.

**19.** The receiving method of claim 12, wherein the conveying of the optimal beamforming weight comprises:

selecting the optimal beamforming weight based on the current channel state from among the selected beamforming weights; and
conveying a codebook index of the selected beamforming weight to the transmitter.

**20.** The receiving method of claim 12, wherein the conveying of the optimal beamforming weight comprises:

generating a channel coefficient matrix by performing a channel estimation using at least one signal received through a plurality of RX antennas;
using the channel coefficient matrix to search for the optimal beamforming weight based on the current channel state from among the selected beamforming weights; and
conveying a codebook index of the searched optimal beamforming weight to the transmitter.

**21.** A receiving method of a MIMO antenna system having a codebook with beamforming weights, the method comprising:

aligning the codebook according to beam directions;
selecting beamforming weights corresponding to a window size from the aligned codebook; and
selecting an optimal beamforming weight based on a current channel state from among the selected beamforming weights and conveying the selected optimal beamforming weight to a transmitter.

**22.** The receiving method of claim 21, wherein the selecting of the beamforming weights comprises:

checking a previously selected beamforming vector; and
selecting the beamforming weights corresponding to the window size based on the previously selected beamforming vector.

**23.** The receiving method of claim 21, further comprising changing the window size according to channel environment.

**24.** The receiving method of claim 21, further comprising changing an update period of the window size according to channel environment.

**25.** The receiving method of claim 21, wherein the window size comprises a fixed value.

**26.** The receiving method of claim 21, wherein the conveying of the optimal beamforming weight comprises:

selecting the optimal beamforming weight based on the current channel state among the selected beamforming weights; and
conveying a codebook index of the selected beamforming weight to the transmitter.

**27.** A transmitting method in a wireless communication system comprising:

storing a codebook comprising beamforming weights aligned according to beam directions, and generating a beamforming weight according to a codebook index conveyed from a receiver; and
multiplying transmission symbols by the beamforming weight and transmitting the resulting signals through a plurality of TX antennas.

**28.** The transmitting method of claim 27, wherein the codebook comprises a design using Grassmannian Line Packing aligned according to beam directions.

FIG.1

(CONVENTIONAL ART)

EP 1 732 245 A2

FIG.2

START

RECEIVE $i^{th}$ SIGNAL ~301

CALCULATE CHANNEL COEFFICIENT MATRIX ~303

DECIDE SEARCHING WINDOW SIZE ~305

CHECK INDEX OF $(i-1)^{th}$
BEAMFORMING VECTOR ~307

SELECT BEAMFORMING
VECTORS TO BE SEARCHED ~309

DECIDE OPTIMAL BEAMFORMING VECTOR ~311

FEED BACK INDEX OF OPTIMAL
BEAMFORMING VECTOR TO TRANSMITTER ~313

END

# FIG.3

EP 1 732 245 A2

CODEBOOK NUMBER(W1~W64)

| | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|
| 1 | 33 | ... | 56 | 57 | 58 | 59 | 60 | 61 | 62 | 63 | 33 | 64 | 1 | 2 | 3 | 4 | 5 | 6 | 7 | 8 | 9 | 10 | 11 | 12 | 13 | 14 | 16 | 17 | 18 | 19 | 20 | 21 | 22 | 23 | ... | 32 |
| 2 | 33 | ... | 56 | 57 | 58 | 59 | 60 | 61 | 62 | 63 | 33 | 64 | 1 | 2 | 3 | 4 | 5 | 6 | 7 | 8 | 9 | 10 | 11 | 12 | 13 | 14 | 16 | 17 | 18 | 19 | 20 | 21 | 22 | 23 | ... | 32 |
| 3 | 33 | ... | 56 | 57 | 58 | 59 | 60 | 61 | 62 | 63 | 33 | 64 | 1 | 2 | 3 | 4 | 5 | 6 | 7 | 8 | 9 | 10 | 11 | 12 | 13 | 14 | 16 | 17 | 18 | 19 | 20 | 21 | 22 | 23 | ... | 32 |
| 4 | 33 | ... | 56 | 57 | 58 | 59 | 60 | 61 | 62 | 63 | 33 | 64 | 1 | 2 | 3 | 4 | 5 | 6 | 7 | 8 | 9 | 10 | 11 | 12 | 13 | 14 | 16 | 17 | 18 | 19 | 20 | 21 | 22 | 23 | ... | 32 |
| 5 | 33 | ... | 56 | 57 | 58 | 59 | 60 | 61 | 62 | 63 | 33 | 64 | 1 | 2 | 3 | 4 | 5 | 6 | 7 | 8 | 9 | 10 | 11 | 12 | 13 | 14 | 16 | 17 | 18 | 19 | 20 | 21 | 22 | 23 | ... | 32 |
| 6 | 33 | ... | 56 | 57 | 58 | 59 | 60 | 61 | 62 | 63 | 33 | 64 | 1 | 2 | 3 | 4 | 5 | 6 | 7 | 8 | 9 | 10 | 11 | 12 | 13 | 14 | 16 | 17 | 18 | 19 | 20 | 21 | 22 | 23 | ... | 32 |

Time

WINDOW

FULL SEARCH(W1~W64)

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10200548655 A